# EUROPEAN PATENT APPLICATION

(11) **EP 2 753 078 A1**
(43) Date of publication of application: **09.07.2014**
(21) Application number: 13150555.4
(22) Date of filing: 08.01.2013
(51) Int. Cl.: H04N 7/24

(54) **Methods and systems for prediction filtering in video coding**

(30) Priority: 07.01.2013 US 201313735782
(71) Applicant: BlackBerry Limited, Waterloo, ON N2K 0A7 (CA)
(72) Inventor: Flynn, David, Waterloo, Ontario N2L 3W8 (CA); He, Dake, Waterloo, Ontario N2L 3W8 (CA)
(74) Representative: Patel, Binesh

(57) **Abstract**

Methods of encoding and decoding video, in particular chroma components, using filtered predictions, are described. An intra or inter predicted block is first filtered before being used to determine residual data at the encoder or to reconstruct chroma data at the decoder. The filtering tends to be low-pass filtering, which removes high-frequency components from the prediction block. The encoder signals the use of the filter to the decoder by including a filtered-prediction flag for each coding unit, or other region within a picture, that has been subject to prediction filtering. The syntax may provide that only coding units above a threshold size have an associated filtered-prediction flag; smaller coding units are governed by a filtered-prediction flag sent in connection with a higher node in the coding tree block.

## Description

### COPYRIGHT NOTICE

A portion of the disclosure of this document and accompanying materials contains material to which a claim for copyright is made. The copyright owner has no objection to the facsimile reproduction by anyone of the patent document or the patent disclosure, as it appears in the Patent and Trademark Office files or records, but reserves all other copyright rights whatsoever.

### FIELD

The present application generally relates to data compression and, in particular, to methods and devices for video coding that feature filtered predictions.

### BACKGROUND

Data compression occurs in a number of contexts. It is very commonly used in communications and computer networking to store, transmit, and reproduce information efficiently. It finds particular application in the encoding of images, audio and video. Video presents a significant challenge to data compression because of the large amount of data required for each video frame and the speed with which encoding and decoding often needs to occur. The current state-of-the-art for video encoding is the ITU-T H.264/AVC video coding standard. It defines a number of different profiles for different applications, including the Main profile, Baseline profile and others. A next-generation video encoding standard is currently under development through a joint initiative of MPEG-ITU termed High Efficiency Video Coding (HEVC).

There are a number of standards for encoding/decoding images and videos, including H.264, that use block-based coding processes. In these processes, the image or frame is divided into blocks, typically 4x4 or 8x8, although non-square blocks may be used in some cases, and the blocks are spectrally transformed into coefficients, quantized, and entropy encoded. In many cases, the data being transformed is not the actual pixel data, but is residual data following a prediction operation. Predictions can be intra-frame, *i.e.* block-to-block within the frame/image, or inter-frame, *i.e.* between frames (also called motion prediction). HEVC will also have these features.

When spectrally transforming residual data, many of these standards prescribe the use of a discrete cosine transform (DCT) or some variant thereon. The resulting DCT coefficients are then quantized using a quantizer to produce quantized transform domain coefficients, or indices. The blocks of quantized coefficients are then entropy encoded and packaged with side information, like motion vectors and other data, to produce a bitstream of encoded video.

At the decoder, the bitstream is entropy decoded to reconstruct the quantized coefficients. The decoder then inverse quantizes and inverse transforms the reconstructed quantized coefficients to reconstruct the pixel domain residual. Using the same prediction operation as was used at the encoder, the pixel data is then reconstructed.

Pixel data is generally separated into luma and chroma components and each are encoded using a similar process (usually two chroma components). Because of human perception limitations regarding spatial location of color data, chroma is typically subsampled such that a pair of chroma components are only sent for every two or four luma components. This has worked well for natural scene video, but has posed problems for computer-generated content, such as text and graphics, which require sharp color edge definition to avoid blurriness and other artefacts.

The unsuitability of chroma subsampling to some types of content become more problematic in the case of mixed content containing both natural scenes and computer-generated graphics.

### BRIEF SUMMARY

The present application describes methods and encoders/decoders for encoding and decoding video, in one case chroma components, using filtered predictions. An intra or inter predicted block is first filtered before being used to determine residual data at the encoder or to reconstruct pixel data at the decoder. In one embodiment, filtering is low-pass filtering that removes high-frequency components from the prediction block. The encoder may signal the use of the filter to the decoder by including a filtered-prediction flag for each coding unit, or other region within a picture, that has been subject to prediction filtering. The syntax may provide that only coding units above a threshold size have an associated filtered-prediction flag; smaller coding units may be governed by a filtered-prediction flag sent in connection with a higher node in the coding tree block.

In a first aspect, the present application describes a method of decoding video from a bitstream of encoded video using a video decoder, the video including a picture partitioned into blocks. The method includes decoding a filtered-prediction flag and prediction information for one of the blocks; constructing a prediction block of predicted samples for said one of the blocks based on the prediction information and previously-reconstructed pixel data of the video; filtering the predicted samples of the constructed prediction block using a filter if the decoded filtered-prediction flag is set; decoding residual data for said one of the blocks; and reconstructing said one of the blocks by adding the decoded residual data to the filtered predicted samples.

The present application further discloses a method of encoding video using a video encoder, the video including a picture partitioned into blocks. The method includes generating a prediction block of predicted samples for one of the blocks based on previously-reconstructed pixel data of the video; determining that the prediction block is to be filtered, and filtering the predicted samples of the prediction block to create a filtered prediction block; calculating a residual from the difference between the filtered prediction block and said one of the blocks; and encoding said residual together with a filtered-prediction flag indicating that the prediction block was filtered.

In a further aspect, the present application describes encoders and decoders configured to implement such methods of encoding and decoding.

In yet a further aspect, the present application describes non-transitory computer-readable media storing computer-executable program instructions which, when executed, configured a processor to perform the described methods of encoding and/or decoding.

Other aspects and features of the present application will be understood by those of ordinary skill in the art from a review of the following description of examples in conjunction with the accompanying figures.

### BRIEF DESCRIPTION OF THE DRAWINGS

Reference will now be made, by way of example, to the accompanying drawings which show example embodiments of the present application, and in which:

Figure 1 shows, in block diagram form, an encoder for encoding video;

Figure 2 shows, in block diagram form, a decoder for decoding video;

Figure 3 shows, in flowchart form, an example process for encoding video using filtered predictions;

Figure 4 shows, in flowchart form, a process for decoding a bitstream of encoded video that may be based upon filtered predictions;

Figure 5 shows a simplified block diagram of an example embodiment of an encoder; and

Figure 6 shows a simplified block diagram of an example embodiment of a decoder.

Similar reference numerals may have been used in different figures to denote similar components.

### DESCRIPTION OF EXAMPLE EMBODIMENTS

In the description that follows, some example embodiments are described with reference to the H.264 standard for video coding and/or the developing HEVC standard. Those ordinarily skilled in the art will understand that the present application is not limited to H.264/AVC or HEVC but may be applicable to other video coding/decoding standards, including possible future standards, multi-view coding standards, scalable video coding standards, and reconfigurable video coding standards.

In the description that follows, when referring to video or images the terms frame, picture, slice, tile and rectangular slice group may be used somewhat interchangeably. Those of skill in the art will appreciate that, in the case of the H.264 standard, a frame may contain one or more slices. The term "frame" may be replaced with "picture" in HEVC. A series of frames/pictures may be called a "sequence" in some cases. Other terms may be used in other video coding standards. It will also be appreciated that certain encoding/decoding operations might be performed on a frame-by-frame basis, some are performed on a slice-by-slice basis, some picture-by-picture, some tile-by-tile, and some by rectangular slice group, depending on the particular requirements or terminology of the applicable image or video coding standard. In any particular embodiment, the applicable image or video coding standard may determine whether the operations described below are performed in connection with frames and/or slices and/or pictures and/or tiles and/or rectangular slice groups, as the case may be. Accordingly, those ordinarily skilled in the art will understand, in light of the present disclosure, whether particular operations or processes described herein and particular references to frames, slices, pictures, tiles, rectangular slice groups are applicable to frames, slices, pictures, tiles, rectangular slice groups, or some or all of those for a given embodiment. This also applies to coding tree units, coding units, prediction units, transform units, etc., as will become apparent in light of the description below.

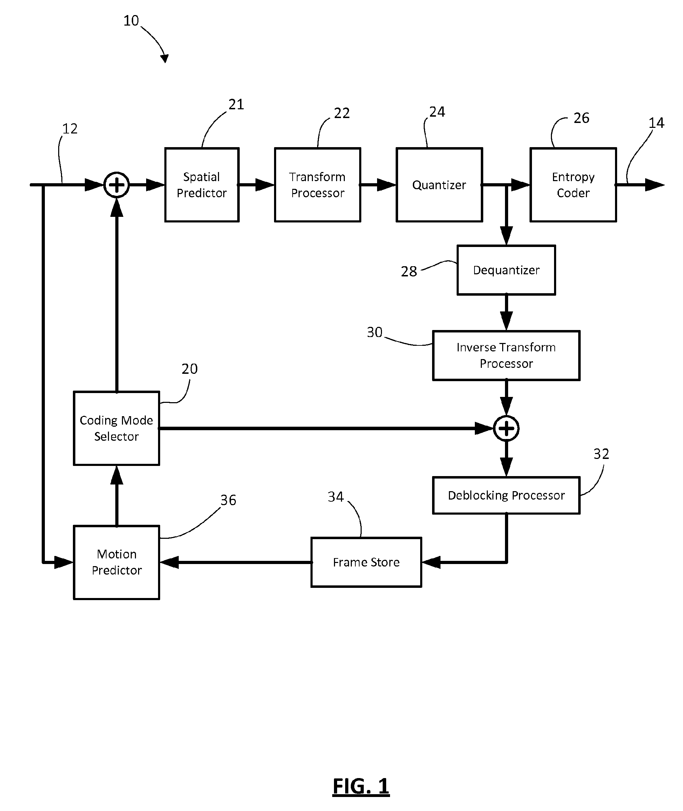

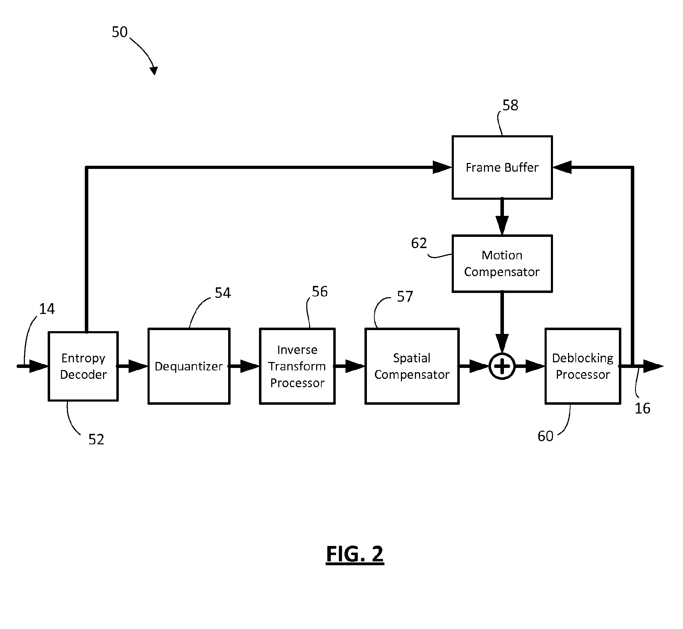

Reference is now made to Figure 1, which shows, in block diagram form, an encoder 10 for encoding video. Reference is also made to Figure 2, which shows a block diagram of a decoder 50 for decoding video. It will be appreciated that the encoder 10 and decoder 50 described herein may each be implemented on an application-specific or general purpose computing device, containing one or more processing elements and memory. The operations performed by the encoder 10 or decoder 50, as the case may be, may be implemented by way of application-specific integrated circuit, for example, or by way of stored program instructions executable by a general purpose processor. The device may include additional software, including, for example, an operating system for controlling basic device functions. The range of devices and platforms within which the encoder 10 or decoder 50 may be implemented will be appreciated by those ordinarily skilled in the art having regard to the following description.

The encoder 10 receives a video source 12 and produces an encoded bitstream 14. The decoder 50 receives the encoded bitstream 14 and outputs a decoded video frame 16. The encoder 10 and decoder 50 may be configured to operate in conformance with a number of video compression standards. For example, the encoder 10 and decoder 50 may be H.264/AVC compliant. In other embodiments, the encoder 10 and decoder 50 may conform to other video compression standards, including evolutions of the H.264/AVC standard, like HEVC.

The encoder 10 includes a spatial predictor 21, a coding mode selector 20, transform processor 22, quantizer 24, and entropy encoder 26. As will be appreciated by those ordinarily skilled in the art, the coding mode selector 20 determines the appropriate coding mode for the video source, for example whether the subject frame/slice is of I, P, or B type, and whether particular coding units (e.g. macroblocks, coding units, etc.) within the frame/slice are inter or intra coded. The transform processor 22 performs a transform upon the spatial domain data. In particular, the transform processor 22 applies a block-based transform to convert spatial domain data to spectral components. For example, in many embodiments a discrete cosine transform (DCT) is used. Other transforms, such as a discrete sine transform, a wavelet transform, or others may be used in some instances. The block-based transform is performed on a transform unit. The transform unit may be the size of the coding unit, or the coding unit may be divided into multiple transform units. In the H.264 standard, for example, a typical 16x16 macroblock (coding unit) contains sixteen 4x4 transform units and the DCT process is performed on the 4x4 blocks. Transform unit (TU) may be other sizes. In some cases, the TU may be non-square, e.g. a non-square quadrature transform (NSQT).

Applying the block-based transform to a block of pixel data results in a set of transform domain coefficients. A "set" in this context is an ordered set in which the coefficients have coefficient positions. In some instances the set of transform domain coefficients may be considered as a "block" or matrix of coefficients. In the description herein the phrases a "set of transform domain coefficients" or a "block of transform domain coefficients" are used interchangeably and are meant to indicate an ordered set of transform domain coefficients.

The set of transform domain coefficients is quantized by the quantizer 24. The quantized coefficients and associated information are then encoded by the entropy encoder 26.

Intra-coded frames/slices (*i.e*. type I) are encoded without reference to other frames/slices. In other words, they do not employ temporal prediction. However intra-coded frames do rely upon spatial prediction within the frame/slice, as illustrated in Figure 1 by the spatial predictor 21. That is, when encoding a particular block the data in the block may be compared to the data of nearby pixels within blocks already encoded for that frame/slice. Using a prediction operation, the encoder creates a predicted block or unit based on the data of nearby pixels. There are various modes or directions for prediction. In some cases rate-distortion optimization may be used to select a mode/direction. The nearby pixels used in the prediction operation are reconstructed pixels that have been previously encoded and decoded within the feedback loop. The difference between the actual pixel data for the block and the predicted block is a residual block, *i.e.* an error signal. The residual data is transformed, quantized and encoded for transmission in the bitstream 14.

Inter-coded frames/blocks rely upon temporal prediction, *i.e.* they are predicted using reconstructed data from other frames/pictures. The encoder 10 has a feedback loop that includes a de-quantizer 28, inverse transform processor 30, and deblocking processor 32. The deblocking processor 32 may include a deblocking processor and a filtering processor. These elements mirror the decoding process implemented by the decoder 50 to reproduce the frame/slice. A frame store 34 is used to store the reproduced frames. In this manner, the motion prediction is based on what will be the reconstructed frames at the decoder 50 and not on the original frames, which may differ from the reconstructed frames due to the lossy compression involved in encoding/decoding. A motion predictor 36 uses the frames/slices stored in the frame store 34 as source frames/slices for comparison to a current frame for the purpose of identifying similar blocks. In other words, a motion vector search is carried out to identify a block within another frame/picture. That block is the source of the predicted block or unit. The difference between the predicted block and the original block becomes the residual data that is then transformed, quantized and encoded.

Those ordinarily skilled in the art will appreciate the details and possible variations for implementing video encoders.

The decoder 50 includes an entropy decoder 52, dequantizer 54, inverse transform processor 56, spatial compensator 57, and deblocking processor 60. The deblocking processor 60 may include deblocking and filtering processors. A frame buffer 58 supplies reconstructed frames for use by a motion compensator 62 in applying motion compensation. The spatial compensator 57 represents the operation of recovering the video data for a particular intra-coded block from a previously decoded block.

The bitstream 14 is received and decoded by the entropy decoder 52 to recover the quantized coefficients. Side information may also be recovered during the entropy decoding process, some of which may be supplied to the motion compensation loop for use in motion compensation, if applicable. For example, the entropy decoder 52 may recover motion vectors and/or reference frame information for inter-coded macroblocks.

The quantized coefficients are then dequantized by the dequantizer 54 to produce the transform domain coefficients, which are then subjected to an inverse transform by the inverse transform processor 56 to recreate/reconstruct the residual pixel-domain data. The spatial compensator 57 generates the video data from the residual data and a predicted block that it creates using spatial prediction. The spatial prediction applies the same prediction mode/direction as was used by the encoder in reliance upon previously-reconstructed pixel data from the same frame. Inter-coded blocks are reconstructed by creating the predicted block based on a previously-decoded frame/picture and the motion vector decoded from the bitstream. The reconstructed residual data is then added to the predicted block to generate the reconstructed pixel data. Both spatial and motion compensation may be referred to herein as "prediction operations".

A deblocking/filtering process may then be applied to a reconstructed frame/slice, as indicated by the deblocking processor 60. After deblocking/filtering, the frame/slice is output as the decoded video frame 16, for example for display on a display device. It will be understood that the video playback machine, such as a computer, set-top box, DVD or Blu-Ray player, and/or mobile handheld device, may buffer decoded frames in a memory prior to display on an output device.

In HEVC and some other coding standards, the picture is divided in a nonoverlapping set of blocks. In HEVC, for example, each picture is divided into 64x64 coding tree blocks (CTB) (sometimes referred to as "coding tree units"). Each CTB may then be further divided in a quad-tree structured division into coding-tree nodes and, eventually, coding units. Note that in this structure the "leaf nodes", *i.e.* the coding units (CUs), are not necessarily all the same size. As an example, a CTB may be divided into 32x32 blocks, two of which may be CUs (leaf nodes) and two of which may be further divided into 16x16 blocks. Some of these may be CUs and some may be yet further divided into 8x8 blocks, *etc.*

Although the foregoing description refers to pixels, it will be appreciated that many video coding systems use both luma data (Y) and chrominance data (U and V, or Cb and Cr) for each pixel. In fact, the separation of pixel data into luma and chroma in digital video systems allows for the use of chroma subsampling. Because the human eye is less sensitive to chroma detail in a natural video scene, the chroma data may be subsampled and sent with lower resolution so as to achieve greater compression. In current video coding standards, a chroma sampling format of 4:4:4 indicates no chroma subsampling, 4:2:2 indicates chroma subsampling by a factor of 2 horizontally, and 4:2:0 indicates chroma subsampling by a factor of 2 horizontally and vertically.

Digital video compression using 4:2:0 chroma subsampling is in common usage because of the limited human ability to perceive spatial locality of colour in natural scenes. However, digital video is more commonly being used to encode/decode computer-generated content, or mixtures of computer-generated content and natural scenes. The computer-generated content is typified by sharp edges, impulses and high-frequency. An example is text or computer graphics. High fidelity is required to avoid blurring of the sharp edges in such content, both for luma and chroma components. Note that "computer-generated" content in this respect does not necessarily refer to "computer-generated imagery" or "CGI", where the computer-created content is intentionally designed to blend into, or appear as, a natural scene in a movie or television program.

One problem with current coding, in the case of low chroma fidelity video, is that it seems that a 4:4:4 system is unable to achieve the same rate-distortion performance as a 4:2:0 system, or even a 4:2:2 system, when coding the same video source. A specific problem arises in the cases of mixed content video in which computer-generated content requiring high-fidelity chroma appears in the same picture as natural scene content for which high-fidelity chroma data is unnecessary. This may arise, for example, in the case of a graphical or textual frame or presentation that includes within it embedded natural scene video content.

One of the reasons that a 4:4:4 system is not as efficient as a 4:2:0 system or a 4:2:2 system, in coding low chroma fidelity video sources, is that prediction processes can sometimes produce predicted blocks that contain high frequency components, even for low chroma fidelity content. Those high-frequency components then need to be offset at the encoder using a residual (error) signal with high-frequency components, which results in additional data overhead for transmission. Moreover, in many cases the high-frequency residual will be quantized to zero and the error will end up not being corrected. Note that although deblocking may be applied to the output picture, it does not necessarily remove the high-frequency error since deblocking cannot be too strong because filtering too aggressively leads to significant distortion (blurriness and loss of detail) in the output picture.

Accordingly, in one aspect, the present application describes a video coding system in which chroma fidelity can be adjusted for different regions of a picture/frame. The video coding system is configured to encode/decode at the highest desired level of chroma fidelity and to use block/region specific flags to indicate whether lower-level chroma fidelity is enabled for a given block/region. The chroma data for that block/region is then handled differently, as will be described below. In particular, in one embodiment, filtering is applied to the prediction block used in encoding/decoding that block/region of chroma data. This may be referred to herein as "prediction filtering". In general, the prediction block generated by the encoder or decoder, whether for intra-prediction or inter-prediction, is filtered using a selected filter if lower-fidelity chroma data is indicated for that block/region by an associated filtered-prediction flag. In another aspect, this concept is extended to luma data. That is, although the description herein of example embodiments makes reference to chroma prediction blocks, it will be understood that the present application is not limited to filtering of chroma prediction blocks and may alternatively or additionally be applied to the filtering of luma prediction blocks.

In one aspect, the prediction filtering may be signalled at the CTB level, at the CU level, or at the prediction unit (PU) level. That is, the filtered-prediction flag may be part of the syntax for signalling the CTB, or for signalling the CU, or for signalling the PU. In one example embodiment, the filtered-prediction flag is signalled per CU within the CTB quadtree structure, but subject to a minimum threshold size. In this example, the decoder decodes a filtered-prediction flag for each CU unless the CU is smaller than the threshold size, in which case the decoder decodes a filtered-prediction flag for the CTB node at the threshold size and that filtered-prediction flag in the CTB controls whether filtering is enabled or disabled for all CUs within that node. In the case where either or both the chroma and luma predictions are subject to possible filtering, separate flags may be used: a chroma-filtered-prediction flag and a luma-filtered-prediction flag.

In another embodiment, prediction filtering may be enabled or disabled at a group-of-pictures (GOP), sequence, or picture level. That is, the relevant header may contain a flag for enabling or disabling prediction filtering for the entire GOP/sequence/picture. If enabled, then the syntax for the CTBs/CUs may contain the filtered-prediction flags as described above. If disabled, then the chroma prediction filtering is disabled for that GOP/sequence/picture and no filtered-prediction flags are included in the bitstream.

The decision regarding whether to filter chroma prediction blocks for a given GOP, sequence, picture, slice, CTB, CU, PU, *etc.* is made by the encoder. The decision may be rate-distortion based in some embodiments. In other cases, it may be at least partly dependent upon the type of prediction (intra versus inter), the quantization parameter, qP, and/or side information that may indicate whether a picture or sequence contains mixed natural and computer-generated content. In some cases, the decision may be based on a visual quality setting, e.g. chroma fidelity. In some cases, the decision is a configurable option selected prior to initiating encoding.

The filters applied to the chroma prediction blocks may be specified for a sequence in a sequence header, in one case. A filter may be selected from a predefined set of filters and may be communicated to the decoder by transmitting its corresponding index to the predefined set. In one example, the filter may be designed and communicated to the decoder through specifying filter tap values. In some example embodiments, both horizontal and vertical filters may be specified, which may have different filter strengths in some cases. The filter may be specified at the level of a sequence, a picture, a slice, a CTB, or for each CU or PU. In some cases, the filter strength or index is not explicitly communicated, but rather is determined based upon another coding parameter, such as the qP or whether the prediction block is proximate a boundary. In one example, the base filter strength may be based upon a selected filter but the filter strength may be adaptively modified based upon whether the prediction block sample being filtered is based on a reconstructed pixel that is near a boundary, e.g. a block boundary within a reference frame in the case of inter-coding.

At prediction block boundaries the filter may require data from beyond the edge of the block. This may be addressed through increasing the size of the block using real samples from beyond the edges of the block (in the case of inter prediction, *i.e.* motion compensation) or may use edge extension to expand the size of the block using the values of the boundary pixels of the prediction block itself. In the case of inter-coding, a CU may be partitioned into regions each of which has a prediction block, and those prediction blocks may be based on different locations in a reference frame, or even different reference frames. In this case, in one embodiment, the multiple prediction blocks may be assembled together in an array corresponding in size to the CU, and the prediction filtering may be applied to the assembled array of prediction samples that covers multiple prediction blocks. This at least addresses the boundary filtering issue at the internal boundaries between adjacent prediction units. Edge extension or other techniques may be used when filtering prediction samples at the edges of the array.

In some cases, the encoder and/or decoder may be configured to simply infer some high frequency transform coefficients to be zero when the filtered-prediction flag is set. This may, in some cases, be implemented as a mask that zeros certain high frequency transform domain positions in a transform block. This mask may be applied in addition to or instead of the prediction filtering described above. The frequency threshold may be signalled, for example, as a form of filter parameter.

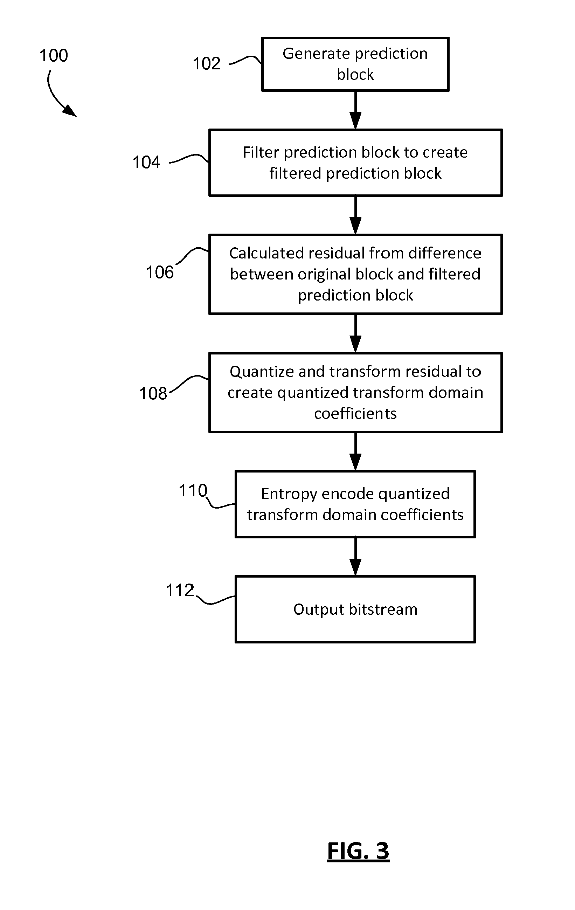

Reference is now made to Figure 3, which shows, in flowchart form, an example process 100 for encoding video data in a video encoder using a filtered prediction. The process 100 assumes that a decision has been made, in whatsoever manner, to filter predictions for a current block (whether at the sequence, picture, slice, CTB, CU or PU level).

In operation 102, a prediction block is generated for the current block. The prediction may be intra prediction, in which case it is based on reconstructed pixels of adjacent blocks that have already been encoded (and decoded in the feedback loop), or it may be inter prediction, which case it is based on reconstructed pixels of one or more blocks in other pictures/frames in the sequence that have already been encoded (and decoded in the feedback loop). In any case, the encoder generates a prediction block using the applicable prediction operation, where the prediction block is a set of predicted samples.

In operation 104, the encoder then filters this prediction block using the filter parameters selected for prediction filtering. As noted above, the filter parameters may have been preselected as the sequence, picture, slice, or CTB level, or may be newly selected for each CU or PU for which prediction filtering is enabled. The filtering of the prediction block results in a filtered prediction block.

Note that operation 104 may include making a determination that the prediction block should be filtered in this case. The determination may be based on rate-distortion analysis or may be based on other factors, as described above.

The encoder then calculates a residual from the difference between the current block of pixel (in this case, chroma) values and the filtered prediction block in operation 106. The resulting difference, or residual, is then quantized and spectrally transformed in operation 108 to produce quantized transform domain coefficients. In operation 110, these quantized transform domain coefficients are then entropy encoded and then are output as part of the bitstream in operation 112. The encoded coefficients are placed in the bitstream in accordance with a syntax by which the decoder is configured to decode the bitstream to recover the coefficients and associated data, such as the filtered-prediction flags. One example syntax will be described later below.

Operation 108 may include applying the mask described above to the quantized transform domain coefficients so as to zero any high frequency coefficients above a predefined threshold, in some embodiments.

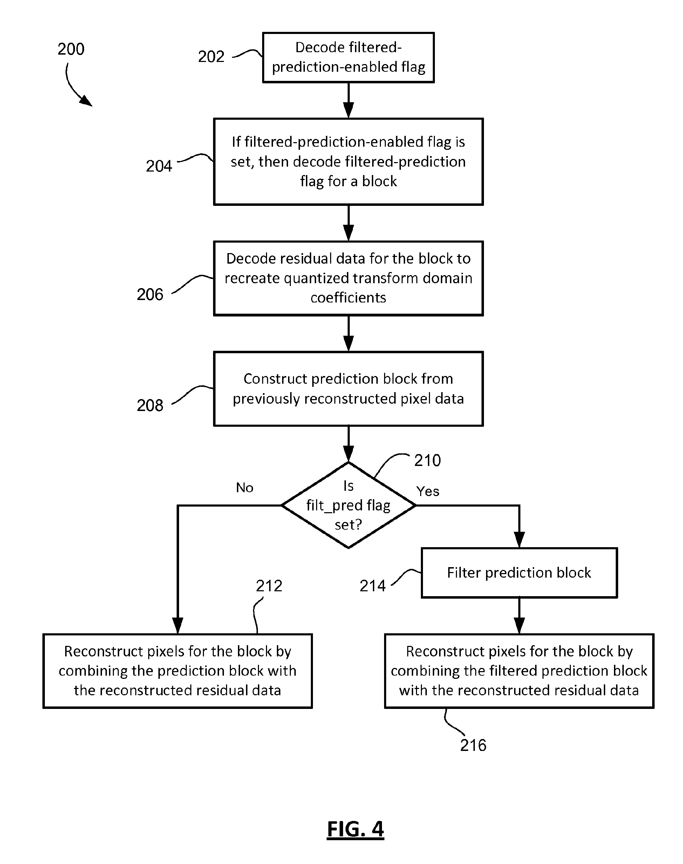

Reference will now be made to Figure 4, which shows in flowchart form an example process 200 for decoding a bitstream of encoded video in accordance with one aspect of the present application. The process 200 includes initially decoding a filtered-prediction-enabled flag in operation 202. This filtered-prediction-enabled flag 202 may be decoded as part of a sequence header, picture header, slice header, or the CTB, in some examples. It indicates whether the decoder should decode filtered-prediction flags for CUs (or CTBs, as the case may be) later in the decoding process. In some cases, the encoder will have determined that it is not necessary or desirable to filter predictions of an entire sequence/picture/slice and will disable the filtered-prediction flags, thereby relieving the decoder of the burden of decoding them and, thus, improving compression under those circumstances.

When decoding data for a block (which in some cases may be a CTB node, or a CU, or a transform unit (TU) depending on the implementation), in operation 204 the decoder decodes a filtered-prediction flag if the filtered-prediction-enabled flag is set. The filtered-prediction flag tells the decoder whether to filter predictions for the current block or not. In operation 206, the decoder decodes residual data from the bitstream. In other words, the decoder entropy decodes the quantized transform domain coefficients, and then reconstructs the residual data by inverse quantizing and inverse transforming the coefficients.

A prediction block is constructed in operation 208. The prediction operation may be intra prediction (spatial prediction) or inter prediction (motion compensation). The precise prediction operation is at least partly signalled in the bitstream, for example as a particular intra-coding mode or by way of motion vector. The decoder therefore constructs the same prediction block that would have been constructed by the encoder during encoding.

At operation 210, the decoder checks the filtered-prediction flag that was decoded in operation 204. If the flag is not set, then the prediction block does not need to be filtered, and the decoder uses the prediction block in operation 212 to reconstruct chroma data for pixels of the current block by combining the prediction block with the reconstructed residual data.

If the filtered-prediction flag is set, then the decoder filters the prediction block in operation 214. The filter to be used may have been specified earlier in the bitstream or it may be inferred by the decoder based upon some other coding parameters, as described above. The filtering operation results in a filtered prediction block. The decoder then combines the filtered prediction block with the decoded residual data to reconstruct chroma pixel data for the block in operation 216.

The filtered-prediction flag and/or the filtered-prediction-enabled flag may be entropy encoded using a respective dedicated context in one embodiment. In another embodiment, the flags may share a context. In yet another embodiment, the filtered-prediction flag may have two or more contexts. Selection between the contexts may be dependent upon the history of filtered-prediction flags for the current picture or slice. Context determination in that case may include a state machine in which a transition between states is dependent upon the value of the last decoded filtered-prediction flag for that picture/slice.

By way of an illustrative example, example decoding syntax is detailed below in pseudo-code form for signalling filter details and whether to filter specific prediction blocks. In this example, the sequence header is presumed to have a filtered-prediction-enabled flag denoted filtpred_enabled_flag. The picture parameter set specifies the filter values, including the size threshold below which filtered-prediction flags will not be sent for individual CUs, and horizontal and vertical filter values (indices):

| | | | |
|---|---|---|---|
| pic_parameter_set_rbsp( ) { | | | **Descriptor** |
| ... | | | ... |
| | **log2_parallel_merge _level_minus2** | | ue(v) |
| | if( filtpred_enabled_flag) | | |
| | | **log2_min_filtpred_luma_coding_block_size_minus3** | ue(v) |
| | | **filtpred_filter_hor** | ue(v) |
| | | **filtpred_filter_ver** | ue(v) |
| | } | | |
| .. | | | ... |

Within the CTB syntax, denoted coding_quadtree(), a filtered-prediction flag is decoded if the node is at the threshold size and if the filtered-prediction-enabled flag is set and if the split_cu_flag indicates that the current node/block is further divided into small CUs:

| | | | | |
|---|---|---|---|---|
| coding_quadtree( x0, y0, log2CbSize, ctDepth ) { | | | | **Descriptor** |
| | if( x0 + ( 1 « log2CbSize ) <= pic_width_in_luma_samples && y0 + ( 1 << log2CbSize ) <= pic_height_in_luma_samples && log2CbSize > Log2MinCbSizeY ) | | | |
| | | | **split_cu_flag**[ x0 ][ y0 ] | ae(v) |
| | if( (cu_qp_delta_enabled_flag && log2CbSize >= Log2MinCuQpDeltaSize ) { | | | |
| | | IsCuQpDeltaCoded = 0 | | |
| | | CuQpDelta = 0 | | |
| | } | | | |
| | if( split_cu_flag x0 ][ y0 ] ) { | | | |
| | | if( filtpred_enabled_flag && log2CbSize = = Log2MinFiltPredCbSizeY ) | | |
| | | | **filtpred_flag**[ x0 ] [ y0 ] | ae(v) |
| | | x1 = x0 + ( (1 << log2CbSize ) >> 1 ) | | |
| | | y1 = y0 + ( ( 1 << log2CbSize ) >> 1 ) | | |
| | | coding_quadtree( x0, y0, log2CbSize - 1, ctDepth + 1 ) | | |
| | | if( x1 < pic_width_in_luma_samples ) | | |
| | | | coding_quadtree( x1, y0, log2CbSize - 1, ctDepth + 1 ) | |
| | | if( y1 < pic_height_in_luma_samples ) | | |
| | | | coding_quadtree( x0, y1, log2CbSize - 1, ctDepth + 1 ) | |
| | | if( x1 < pic_width_in_luma_samples && y1 < pic_height_in_luma_samples ) | | |
| | | | coding_quadtree( x1, y1, log2CbSize - 1, ctDepth + 1 ) | |
| | } else { | | | |
| | | coding_unit( x0, y0, log2CbSize ) | | |
| | } | | | |
| } | | | | |

Within the CTB syntax, it will be noted that if there is no further recursive splitting of a CTB node into smaller units (the "else" portion of the conditional), then the coding unit is decoded using the coding_unit() syntax. That syntax provides for decoding of the filtered-prediction flag if the size of the CU is equal to or above the threshold size.

| | | | |
|---|---|---|---|
| coding_unit( x0, y0, log2CbSize ) { | | | **Descriptor** |
| | if( transquant_bypass_enable_flag) { | | |
| | | **cu_transquant_bypass_flag** | ae(v) |
| | } | | |
| | if( slice_type != I) | | |
| | | **skip_flag** [ x0 ] [ y0 ] | ae(v) |
| | if( skip_flag[ x0 ] [ y0 ] ) | | |
| | | if( filtpred_enabled_flag && log2CbSize >= Log2MinFiltPredCbSizeY ) | |
| | | **fiitpred_nagi** x0 ][ y0 ] | ae(v) |
| | | prediction_unit( x0, y0, log2CbSize ) | |
| | else { | | |
| | | nCbS = ( 1 << log2CbSize ) | |
| if( slice_type != I ) | | | |
| | **pred_mode_flag** | | ae(v) |
| if( PredMode[ x0 ] [ y0 ] != MODE_INTRA \| \| log2CbSize = = Log2MinCbSizeY) | | | |
| | **part_mode** | | ae(v) |
| if( PredMode[ x0 ] [ y0 ] = = MODE_INTRA) { | | | |
| | if( PartMode = = PART_2Nx2N && pcm_enabled_Hag && log2CbSize >= Log2MinIpcmCbSizeY && log2CbSize <= Log2MaxIpcmCbSizeY ) | | |
| | **pcm_flag** [ x0 ] [ y0 ] | | ae(v) |
| if( pcm_flag[ x0 ][ y0 ] ) { | | | |
| | while( !byte_aligned( ) ) | | |
| | | **pcm_alignment_zero_bit** | f(1) |
| | pcm_sample( x0, y0, log2CbSize ) | | |
| } else { | | | |
| | if( filtpred_enabled_flag && log2CbSize >= Log2MinFiltPredCbSizeY ) | | |
| | **filtpred_flag** x0 ][ y0 ] | | ae(v) |
| | pbOffset = ( PartMode = = PART_NxN ) ? ( nCbS / 2 ) : nCbS | | |
| | for( j = 0; j < nCbS; j = j + pbOffset ) | | |
| | | for( i = 0; i < nCbS; i = i + pbOffset) { | |
| | | **prev_intra luma_pred flag** [ x0 + i ][ y0+ j ] | ae(v) |
| | } | | |
| | for( j = 0; j < nCbS; j = j + pbOffset ) | | |
| | for( i = 0; i < nCbS; i = i + pbOffset) { | | |
| | | if( prev_intra_luma_pred_flag[ x0 + i ][ [ y0+ j ] ) | |
| | | **mpm_idx[** x0 + i ][ y0+ j ] | ae(v) |
| | | else | |
| | | **rem_intra_tuma_pred_mode[** x0 + i ] [ y0+ j ] | ae(v) |
| | } | | |
| | **intra_chroma_pred_mode[** x0 ][ y0 ] | | ae(v) |
| } | | | |
| }else{ | | | |
| if( filtpred_enabled_flag && log2CbSize >= Log2MinFiltPredCbSizeY ) | | | |
| | **filtpred_flag[** x0 ][ y0 ] | | ae(v) |
| if( PartMode = = PART_2Nx2N) | | | |
| | prediction_unit( x0, y0, nCbS, nCbS ) | | |
| ... | | | ... |

When reconstructing the chroma pixel data, the decoder filters the prediction block based upon the decoded filtpred_flag[][].

As noted above, the filtering of predictions is partly aimed at preventing inefficiencies from arising in the use of 4:4:4 coding when encoding/decoding low chroma fidelity video. In one sense, the desire is to have the 4:4:4 coding system behave more like a lower fidelity coding system, such as a 4:2:0 coding system. In yet another aspect of the present application, the filtered-prediction flag may be used to cause the decoder to emulate behaviour of a 4:2:0 coding system by disabling "extra" functionality, *i.e.* decoding operations, that would otherwise be implemented in a normal 4:4:4 decoding system. In this aspect, the filtered-prediction flag is employed when the decoder goes to carry out that extra functionality. The extra functionality is conditional upon the filtered-prediction flag (or filtered-prediction-enabled flag) not being set. Example extra functionality may include certain transform skip operations, certain prediction modes, or other features that are normally enabled in 4:4:4 mode and not in 4:2:0 mode. Thus the filtered-prediction flag causes the decoder to disable, *i.e.* forbear from using, a feature specific to high chroma fidelity coding.

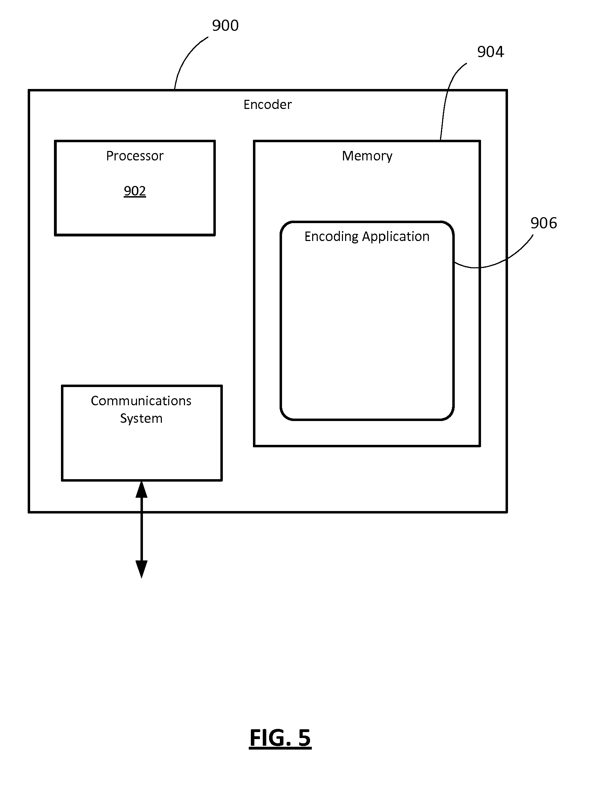

Reference is now made to Figure 5, which shows a simplified block diagram of an example embodiment of an encoder 900. The encoder 900 includes a processor 902, memory 904, and an encoding application 906. The encoding application 906 may include a computer program or application stored in memory 904 and containing instructions for configuring the processor 902 to perform operations such as those described herein. For example, the encoding application 906 may encode and output bitstreams encoded in accordance with the processes described herein. It will be understood that the encoding application 906 may be stored in on a computer readable medium, such as a compact disc, flash memory device, random access memory, hard drive, etc.

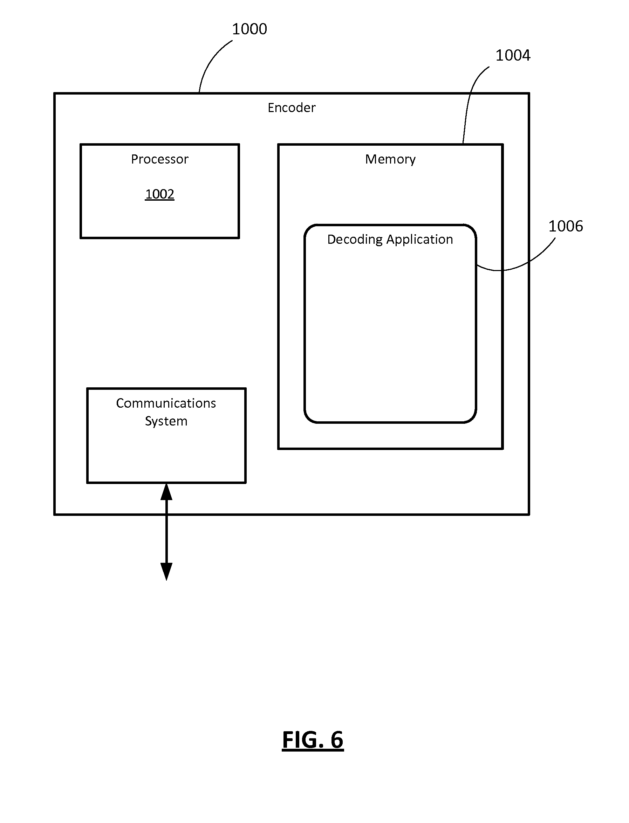

Reference is now also made to Figure 6, which shows a simplified block diagram of an example embodiment of a decoder 1000. The decoder 1000 includes a processor 1002, a memory 1004, and a decoding application 1006. The decoding application 1006 may include a computer program or application stored in memory 1004 and containing instructions for configuring the processor 1002 to perform operations such as those described herein. It will be understood that the decoding application 1006 may be stored in on a computer readable medium, such as a compact disc, flash memory device, random access memory, hard drive, etc.

It will be appreciated that the decoder and/or encoder according to the present application may be implemented in a number of computing devices, including, without limitation, servers, suitably-programmed general purpose computers, audio/video encoding and playback devices, set-top television boxes, television broadcast equipment, and mobile devices. The decoder or encoder may be implemented by way of software containing instructions for configuring a processor to carry out the functions described herein. The software instructions may be stored on any suitable non-transitory computer-readable memory, including CDs, RAM, ROM, Flash memory, etc.

It will be understood that the encoder described herein and the module, routine, process, thread, or other software component implementing the described method/process for configuring the encoder may be realized using standard computer programming techniques and languages. The present application is not limited to particular processors, computer languages, computer programming conventions, data structures, other such implementation details. Those skilled in the art will recognize that the described processes may be implemented as a part of computer-executable code stored in volatile or non-volatile memory, as part of an application-specific integrated chip (ASIC), etc.

Certain adaptations and modifications of the described embodiments can be made. Therefore, the above discussed embodiments are considered to be illustrative and not restrictive.

## Claims

1. A method of decoding video from a bitstream of encoded video using a video decoder, the video including a picture partitioned into blocks, the method comprising:
decoding a filtered-prediction flag and prediction information for one of the blocks;
constructing a prediction block of predicted samples for said one of the blocks based on the prediction information and previously-reconstructed pixel data of the video;
if the decoded filtered-prediction flag is set, filtering the predicted samples of the constructed prediction block using a filter;
decoding residual data for said one of the blocks; and
reconstructing said one of the blocks by adding the decoded residual data to the filtered predicted samples.

2. The method claimed in claim 1, wherein said one of the blocks is a coding unit.

3. The method claimed in claim 1, wherein said one of the blocks is a prediction unit.

4. The method claimed in any one of claims 1 to 3, wherein said prediction information comprises a motion vector, and wherein said previously-reconstructed pixel data comprises a reconstructed block from another picture.

5. The method claimed in any one of claims 1 to 3, wherein said prediction information comprises an intra-coding mode, and wherein said previously-reconstructed pixel data comprises pixel data from another block in the picture.

6. The method claimed in any one of claims 1 to 5, wherein decoding the filtered-prediction flag and the prediction information includes first determining that a filtered-prediction-enabled flag is set and that the block size is above a threshold value.

7. The method claimed in any one of claims 1 to 6, wherein decoding residual data comprises decoding the bitstream to recover quantized transform domain coefficients, and inverse quantizing and inverse transforming those coefficients to reconstruct the residual data.

8. The method claimed in any one of claims 1 to 7, wherein the predicted samples and residual data are chroma values.

9. The method claimed in any one of claims 1 to 8, further comprising disabling a high-chroma-fidelity-specific decoding operation if the decoded filtered-prediction flag is set.

10. A decoder for decoding a bitstream of encoded video to reconstruct coefficients of a coefficient group in a video decoder, the coefficient group including an upper left coefficient, the decoder comprising:
a processor;
a memory; and
a decoding application stored in memory and containing instructions for configuring the processor to perform the method claimed in any one of claims 1 to 9.

11. A method of encoding video using a video encoder, the video including a picture partitioned into blocks, the method comprising:
generating a prediction block of predicted samples for one of the blocks based on previously-reconstructed pixel data of the video;
determining that the prediction block is to be filtered, and filtering the predicted samples of the prediction block to create a filtered prediction block;
calculating a residual from the difference between the filtered prediction block and said one of the blocks; and
encoding said residual together with a filtered-prediction flag indicating that the prediction block was filtered.

12. The method claimed in claim 11, wherein determining that the prediction block is to be filtered includes checking a filtered-prediction-enabled flag, and wherein encoding includes encoding the filtered-prediction-enabled flag.

13. The method claimed in claim 11, wherein encoding includes determining whether said one of the blocks is above a threshold size and, if so, encoding the filtered-prediction flag in a block syntax and, if not, encoding the filtered-prediction flag in a coding tree syntax that contain one or more block syntaxes.

14. An encoder for encoding video, the video including a picture partitioned into blocks, the decoder comprising:
a processor;
a memory; and
an encoding application stored in memory and containing instructions for configuring the processor to perform the method claimed in any one of claims 11 to 13.

15. A non-transitory processor-readable medium storing processor-executable instructions which, when executed, configure one or more processors to perform the method claimed in any one of claims 1 to 9 and 11 to 13.
